(19) Europäisches Patentamt
European Patent Office
Office européen des brevets

(11) EP 0 816 372 B1

(12) EUROPÄISCHE PATENTSCHRIFT

(45) Veröffentlichungstag und Bekanntmachung des Hinweises auf die Patenterteilung:
**29.08.2001 Patentblatt 2001/35**

(51) Int Cl.[7]: **C07F 17/00**, C08F 10/00

(21) Anmeldenummer: **97109456.0**

(22) Anmeldetag: **11.06.1997**

# (54) Übergangsmetallverbindung

Transition metal compound

Composé d'un métal de transition

(84) Benannte Vertragsstaaten:
**BE DE ES FR GB IT NL**

(30) Priorität: **20.06.1996 DE 19624581**

(43) Veröffentlichungstag der Anmeldung:
**07.01.1998 Patentblatt 1998/02**

(73) Patentinhaber: **Basell Polyolefine GmbH
67056 Ludwigshafen (DE)**

(72) Erfinder:
- **Riedel, Michael, Dr.
45130 Essen (DE)**
- **Erker, Gerhard, Prof. Dr.
48159 Münster (DE)**
- **Duda, Lothar, Dl.
48163 Münster (DE)**

(56) Entgegenhaltungen:
**EP-A- 0 316 155**
**EP-A- 0 318 893**
**EP-A- 0 416 815**
**EP-A- 0 495 375**
**EP-A- 0 514 828**
**DE-A- 4 218 199**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 816 372 B1

## Beschreibung

Die vorliegende Erfindung betrifft eine Übergangsmetallverbindung und ein Verfahren zu ihrer Herstellung sowie ihre Verwendung als Katalysatorkomponente bei der Herstellung von Polyolefinen.

Aus der Literatur ist die Herstellung von Polyolefinen mit löslichen Metallocenen sowie Monocyclopentadienylverbindungen in Kombination mit Aluminoxanen oder anderen Cokatalysatoren, die aufgrund ihrer Lewis-Acidität die neutrale Übergangsmetallverbindung in ein Kation überführen und stabilisieren können, bekannt (EP-A 129 368, EP-A 351 392, EP-A 416 815).

Metallocene und Monocyclopentadienylverbindungen sind nicht nur hinsichtlich der Polymerisation oder Oligomerisation von Olefinen von großem Interesse. Sie können auch als Hydrier-, Epoxidations-, Isomerisierungs- und C-C-Kupplungskatalysatoren eingesetzt werden (Chem. Rev. 1992, 92, 965-994).

Bei Einsatz löslicher Metallocenverbindungen auf der Basis von Bis(cyclopentadienyl)zirkon-dialkyl bzw. dihalogenid in Kombination mit oligomeren Aluminoxanen erhält man ataktische Polymere, die wegen ihrer unausgewogenen und ungenügenden Produkteigenschaften technisch nur von geringer Bedeutung sind. Außerdem sind bestimmte Olefincopolymere nicht zugänglich.

Derivate des Zirkonocendichlorids, in denen die beiden substituierten Cyclopentadienylgruppen über eine Methylen-, Ethylen- oder eine Dimethylsilylbrücke miteinander verbunden sind, können aufgrund ihrer konformativen Starrheit als Katalysatoren zur isospezifischen Polymerisation von Olefinen eingesetzt werden (EP-A 316 155).

Es bestand die Aufgabe neue Übergangsmetallverbindungen zur Verfügung zu stellen.

Die vorliegende Erfindung betrifft somit eine Übergangsmetallverbindung, die als Liganden eine Cyclopentadienylgruppe und eine weitere $\pi$-gebundene Einheit enthält, die miteinander über eine Verbrückung A verbunden sind.

Die erfindungsgemäße Übergangsmetallverbindung hat die Formel I,

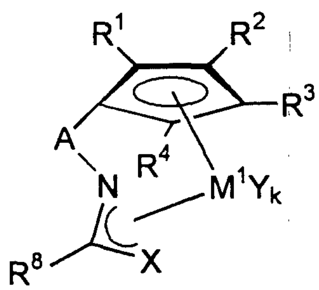

Formel I

worin $M^1$ ein Metall der Gruppe IIIb, IVb oder Vb des Periodensystems der Elemente ist,
$R^1$, $R^2$, $R^3$ und $R^4$ gleich oder verschieden sind und ein Wasserstoffatom, ein Halogenatom, eine $C_1$-$C_{40}$-kohlenwasserstoffhaltige Gruppe wie eine $C_1$-$C_{20}$-Alkyl, eine $C_1$-$C_{10}$-Alkoxy-, eine $C_6$-$C_{20}$-Aryl, eine $C_2$-$C_{12}$-Alkenyl-, eine $C_7$-$C_{40}$-Alkylaryl oder eine $C_8$-$C_{40}$-Arylalkenylgruppe, einen $-SiR^5_3$, $-NR^5_2$, $-Si(OR^5)_3$,$-Si(SR^5)_3$ oder $-PR^5_2$-Rest bedeuten, worin $R^5$ gleich oder verschieden ein Halogenatom, eine $C_1$-$C_{10}$ Alkylgruppe oder eine $C_6$-$C_{10}$-Arylgruppe sind, oder zwei oder mehrere Reste $R^1$, $R^2$, $R^3$ oder $R^4$ zusammen mit den sie verbindenden Atomen ein Ringsystem bilden, welches bevorzugt 4 bis 40 besonders bevorzugt 6 bis 20 Kohlenstoffatome enthält,
Y gleich oder verschieden sind und ein Wasserstoffatom, eine $C_1$-$C_{40}$-kohlenwasserstoffhaltige Gruppe wie eine $C_1$-$C_{20}$-Alkyl, eine $C_1$-$C_{10}$-Alkoxy-, eine $C_6$-$C_{20}$-Aryl, eine $C_2$-$C_{12}$-Alkenyl-, eine $C_7$-$C_{40}$-Alkylaryl, eine $C_8$-$C_{40}$-Arylalkenylgruppe, oder eine substituierte oder unsubstituierte Butadieneinheit ist, eine OH-Gruppe, ein Halogenatom oder eine $NR^5_2$-Gruppe, worin $R^5$ gleich oder verschieden ein Halogenatom, eine $C_1$-$C_{10}$ Alkylgruppe oder eine $C_6$-$C_{10}$-Arylgruppe sind, bedeuten,
k eine ganze Zahl ist, die der Wertigkeit des Übergangsmetallatoms $M^1$ minus zwei entspricht und im Fall, wenn Y eine Butadieneinheit ist, k gleich 1 ist,
A eine Verbrückung wie

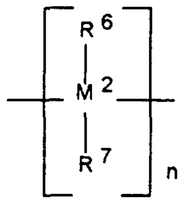

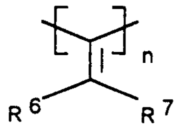

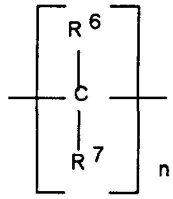

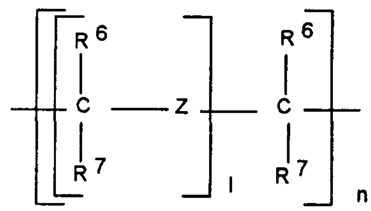

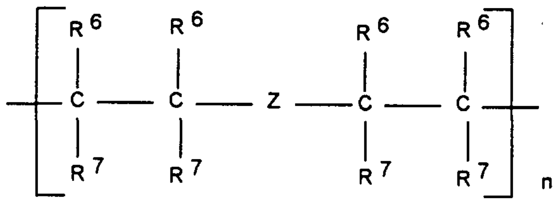

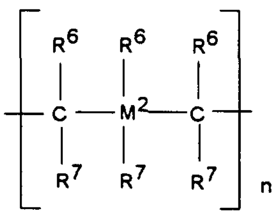

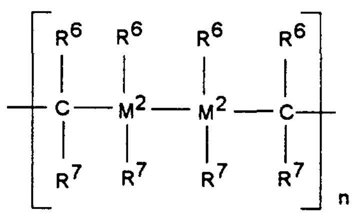

oder

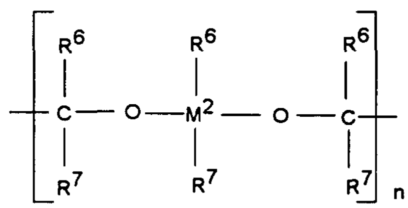

ist, wobei n eine ganze Zahl von 1 bis 20 ist, l eine ganze Zahl von 1 bis 20 ist,
Z gleich
$=NR^5$, $=CO$, $=PR^5$, $=P(O)R^5$, $=SO$, $SO_2$, O oder S ist, worin $R^5$ gleich oder verschieden ein Halogenatom, eine $C_1$-$C_{10}$ Alkylgruppe oder eine $C_6$-$C_{10}$-Arylgruppe sind,
$R^6$ und $R^7$ gleich oder verschieden sind und ein Wasserstoffatom, ein Halogenatom, eine $C_1$-$C_{40}$-kohlenwasserstoffhaltige Gruppe wie eine $C_1$-$C_{20}$-Alkyl, eine $C_1$-$C_{10}$-Alkoxy-, eine $C_6$-$C_{20}$-Aryl, eine $C_2$-$C_{12}$-Alkenyl-, eine $C_7$-$C_{40}$-Alkylaryl oder eine $C_8$-$C_{40}$-Arylalkenylgruppe bedeuten, oder jeweils zwei Reste $R^6$, jeweils zwei Reste $R^7$, oder je ein Rest $R^6$ und $R^7$ jeweils mit den sie verbindenen Atomen ein Ringsystem bilden und $M^2$ Silizium, Germanium oder Zinn ist,
$R^8$ ein Wasserstoffatom, ein Halogenatom, eine $C_1$-$C_{40}$-kohlenstoffhaltige Gruppe wie eine $C_1$-$C_{20}$-Alkyl, eine $C_1$-$C_{10}$-Alkoxy-, eine $C_6$-$C_{20}$-Aryl, eine $C_2$-$C_{12}$-Alkenyl-, eine $C_7$-$C_{40}$-Alkylaryl oder eine $C_8$-$C_{40}$-Arylalkenylgruppe, einen-$SiR^5_3$, $-NR^5_2$, $-Si(OR^5)_3$, $-Si(SR^5)_3$ oder $-PR^5_2$-Rest bedeutet, worin $R^5$ gleich oder verschieden ein Halogenatom, eine $C_1$-$C_{10}$ Alkylgruppe oder eine $C_6$-$C_{10}$-Arylgruppe sind, und
X ein Element der Gruppe Va oder VIa des Periodensystems der Elemente bedeutet, wobei wenn X ein Element der Gruppe Va ist, X einen Rest $R^9$ trägt, der ein Wasserstoffatom, ein Halogenatom, eine $C_1$-$C_{40}$-kohlenstoffhaltige Gruppe wie eine $C_1$-$C_{20}$-Alkyl, eine $C_1$-$C_{10}$-Alkoxy-, eine $C_6$-$C_{20}$-Aryl, eine C2-$C_{12}$-Alkenyl-, eine $C_7$-$C_{40}$-Alkylaryl oder eine $C_8$-$C_{40}$-Arylalkenylgruppe, einen-$SiR^5_3$, $-NR^5_2$, $-Si(OR^5)_3$, $-Si(SR^5)_3$ oder $-PR^5_2$-Rest bedeutet ,worin $R^5$ gleich oder verschieden ein Halogenatom, eine $C_1$-$C_{10}$ Alkylgruppe oder eine $C_6$-$C_{10}$-Arylgruppe sind.

Für Verbindungen der Formel I gilt bevorzugt, daß

$M^1$ ein Metall der Gruppe IVb des Periodensystems der Elemente wie Titan, Zirkonium oder Hafnium ist,
$R^1$, $R^2$, $R^3$ und $R^4$ gleich oder verschieden sind und ein Wasserstoffatom oder eine $C_1$-$C_{10}$-kohlenwasserstoffhaltige Gruppe wie eine $C_1$-$C_{10}$-Alkyl-Gruppe oder $C_6$-$C_{10}$-Aryl-Gruppe sind, oder zwei oder mehrere Reste $R^1$, $R^2$, $R^3$ oder $R^4$ zusammen mit den sie verbindenen Atomen ein Ringsystem bilden, welches bevorzugt 6 bis 10 Kohlenstoffatome aufweist,
Y gleich sind und insbesondere eine $C_1$-$C_{10}$-kohlenwasserstoffhaltige Gruppe wie eine $C_1$-$C_4$-Alkyl-Gruppe oder eine substituierte oder unsubstituierte, insbesondere unsubstiutierte Butadieneinheit, oder ein Halogenatom, insbesondere Chlor, bedeuten,

A

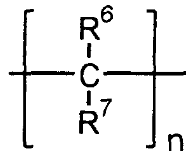

oder

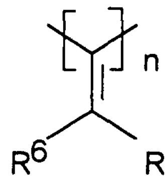

ist, wobei n eine ganze Zahl von 1 bis 8, insbesondere 1, 2, 3 oder 4 ist,
$R^6$ und $R^7$ gleich oder verschieden sind und ein Wasserstoffatom oder eine $C_1$-$C_{10}$-kohlenwasserstoffhaltige Gruppe wie eine $C_1$-$C_{10}$-Alkyl- oder eine $C_6$-$C_{10}$-Aryl-Gruppe sind, oder jeweils zwei Reste $R^6$, jeweils zwei Reste $R^7$, oder je ein Rest $R^6$ und $R^7$ jeweils mit den sie verbindenen Atomen ein Kohlenwasserstoffringsystem bilden,
$R^8$ eine $C_1$-$C_{10}$-Kohlenwasserstoff-Gruppe wie eine $C_1$-$C_4$-Alkylgruppe oder eine $C_6$-$C_{10}$-Arylgruppe ist, und
X gleich ein Element der Gruppe Va, insbesondere Stickstoff oder Phosphor, oder Gruppe VIa, insbesondere Sauerstoff oder Schwefel, des Periodensystems der Elemente bedeutet, wobei wenn X ein Element der Gruppe Va ist, X einen Rest $R^9$ trägt, der ein Wasserstoffatom, eine $C_1$-$C_{10}$-kohlenwasserstoffhaltige Gruppe wie eine $C_1$-$C_{10}$-Alkylgruppe oder eine $C_6$-$C_{10}$-Arylgruppe ist oder einen $-SiR^5_3$, $-NR^5_2$, $-Si(OR^5)_3$, $-Si(SR^5)_3$ oder $-PR^5_2$-Rest, bedeuten, worin $R^5$ gleich oder verschieden eine $C_1$-$C_{10}$ Alkylgruppe oder eine $C_6$-$C_{10}$-Arylgruppe sind.

Besonders bevorzugt sind Verbindungen der Formel I, worin

$M^1$ gleich Titanium oder Zirkonium ist,
$R^1$, $R^2$, $R^3$ und $R^4$ gleich oder verschieden sind und ein Wasserstoffatom, eine $C_1$-$C_4$-Alkylgruppe wie Methyl, Ethyl, Propyl, Isopropyl, Butyl, Isobutyl oder eine $C_6$-$C_{10}$-Arylgruppe wie Phenyl oder Naphthyl bedeuten, oder $R^1$ und $R^2$ oder $R^3$ und $R^4$ oder $R^2$ und $R^3$ mit den sie verbindenen Atomen ein aromatisches Kohlenwasserstoffringsystem bilden, insbesondere einen Sechsring, der seinerseits substituiert sein kann,
Y gleich sind insbesondere Methyl, Phenyl oder Chlor bedeuten,
A gleich

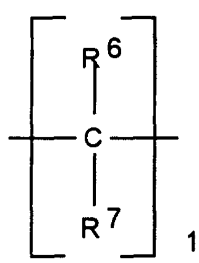

oder

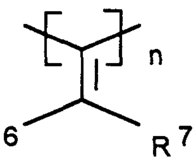

ist, $R^6$ und $R^7$ gleich oder verschieden sind und ein Wasserstoffatom, eine $C_1$-$C_4$-Alkylgruppe wie Methyl, Ethyl, Propyl, Isopropyl, Butyl, Isobutyl oder eine $C_6$-$C_{10}$-Arylgruppe wie Phenyl oder Naphthyl ist,
$R^8$ eine $C_1$-$C_4$-Alkylgruppe wie Methyl, Ethyl, Propyl, Isopropyl, Butyl, Isobutyl oder eine $C_6$-$C_{10}$-Arylgruppe wie Phenyl oder Naphthyl ist, und
X gleich Stickstoff oder Sauerstoff bedeutet, wobei X im Falle von Stickstoff einen Rest $R^9$ trägt, der ein Wasserstoffatom, eine $C_1$-$C_4$-Alkylgruppe wie Methyl, Ethyl, Propyl, Isopropyl, Butyl, Isobutyl oder eine $C_6$-$C_{10}$-Arylgruppe wie Phenyl oder Naphthyl ist, $-SiR^5_3$ oder $-Si(OR^5)_3$, insbesondere $-SiR^5_3$ bedeutet, worin $R^5$ gleich oder verschieden eine $C_1$-$C_4$ Alkylgruppe wie Methyl, Ethyl, Propyl, Isopropyl, Butyl, Isobutyl oder eine $C_6$-$C_{10}$-Arylgruppe wie Phenyl oder Naphthyl bedeuten.

Anhand der folgenden Übergangsmetallverbindung soll die Nomenklatur erläutert werden:
(Tert-Butyl-$\eta^3$-amidato)-($\eta^5$-3-methylcyclopentadienyl)-2-phenyl-2,2-ethandiylzirkoniumdi-chlorid

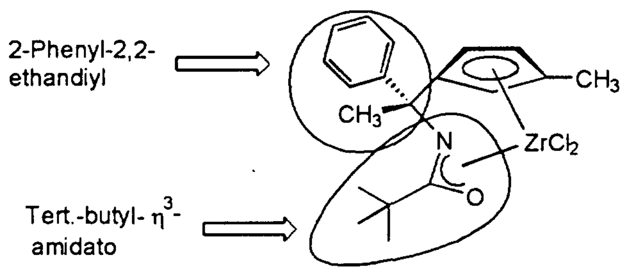


Beispiele für erfindungsgemäße Übergangsmetallverbindungen sind:

(Tert-Butyl-$\eta^3$-amidato)-($\eta^5$-cyclopentadienyl)-2,2-propandiyl-zirkoniumdichlorid
(Phenyl-$\eta^3$-amidato)-($\eta^5$-cyclopentadienyl)-2,2-propandiyl-zirkoniumdichlorid
(Methyl-$\eta^3$-amidato)-($\eta^5$-cyclopentadienyl)-2,2-propandiyl-zirkoniumdichlorid

(Tert-Butyl-$\eta^3$-amidato)-($\eta^5$-cyclopentadienyl)-2-phenyl-2,2-ethandiyltitaniumdichlorid
(Phenyl-$\eta^3$-amidato)-($\eta^5$-cyclopentadienyl)-2-phenyl-2,2-ethandiyltitaniumdichlorid
(Methyl-$\eta^3$-amidato)-($\eta^5$-cyclopentadienyl)-2-phenyl-2,2-ethandiyltitaniumdichlorid

(Tert-Butyl-$\eta^3$-amidato)-($\eta^5$-cyclopentadienyl)-2,2-ethendiyl-zirkoniumdichlorid
(Phenyl-$\eta^3$-amidato)-($\eta^5$-cyclopentadienyl)-2,2-ethendiyl-zirkoniumdichlorid
(Methyl-$\eta^3$-amidato)-($\eta^5$-cyclopentadienyl)-2,2-ethendiyl-zirkoniurndichlorid
(p-Tolyl-$\eta^3$-amidato)-($\eta^5$-cyclopentadienyl)-2,2-ethendiyl-zirkoniumdichlorid
(p-Tolyl-$\eta^3$-amidato)-($\eta^5$-cyclopentadienyl)-2,2-ethendiyl-titaniumdichlorid
(Tert-Butyl-$\eta^3$-amidato)-($\eta^5$-indenyl)-2,2-propandiyl-zirkoniumdichlorid
(Phenyl-$\eta^3$-amidato)-($\eta^5$-indenyl)-2-phenyl-2,2-ethandiyl-zirkoniumdichlorid
(Methyl-$\eta^3$-amidato)-($\eta^5$-indenyl)-2,2-propandiyl-titaniumdichlorid

(Tert-Butyl-$\eta^3$-amidato)-($\eta^5$-3-methylcy(lopentadienyl)-2-phenyl-2,2-ethandiyltitaniumdichlorid
(Phenyl-$\eta^3$-amidato)-($\eta^5$-3-methylcyclopentadienyl)-2-phenyl-2,2-ethandiylzirkoniumdichlorid
(Methyl-$\eta^3$-amidato)-($\eta^5$-3-methylcyclopentadienyl)-2,2-propandiyltitaniumdichlorid

(Tert-Butyl-N-methyl-$\eta^3$-amidinato)-($\eta^5$-cyclopentadienyl)-2,2-propandiylzirkoniumdichlorid
(Phenyl-N-phenyl-$\eta^3$-amidinato)-($\eta^5$-cyclopentadienyl)-2,2-propandiylzirkoniumdichlorid

(Methyl-N-Trimethylsilyl-η3-amidinato)-(η5-cyclopentadienyl)-2,2-propandiylzirkonium-dichlorid

(Tert-Butyl-N-methyl-η3-amidinato)-(η5-cyclopentadienyl)-2-phenyl-2,2-ethandiyltitanium-dichlorid
(Phenyl-N-trimethylsilyl-η3-amidinato)-(η5-cyclopentadienyl)-2-phenyl-2,2-ethandiyl-titanium-dichlorid
(Methyl-N-phenyl-η3-amidinato)-(η5-cyclopentadienyl)-2-phenyl-2,2-ethandiyltitanium-dichlorid
(Tert-Butyl-N-methyl-η3-amidinato)-(η5-cyclopentadienyl)-2,2-ethendiylzirkoniumdichlorid
(Phenyl-N-phenyl-η3-amidinato)-(η5-cyclopentadienyl)-2,2-ethendiylzirkoniumdichlorid
(Methyl-N-Trimethylsilyl-η3-amidinato)-(η5-cyclopentadienyl)-2,2-ethendiylzirkonium-dichlorid
(Tert-Butyl-N-trimethylsilyl-η3-amidinato)-(η5-indenyl)-2,2-propandiylzirkoniumdichlorid
(Phenyl-N-methyl-η3-amidinato)-(η5-indenyl)-2-phenyl-2,2-ethandiylzirkoniumdichlorid (Methyl-N-phenyl-η3-amidinato)-(η5-indenyl)-2,2-propandiyl-titaniumdichlorid
(Tert-Butyl-η3-amidinato)-(η5-3-methylcyclopentadienyl)-2-phenyl-2,2-ethandiyl titaniumdichlorid
(Phenyl-η3-amidinato)-(η5-3-methylcyclopentadienyl)-2-phenyl-2,2-ethandiylzirkoniumdichlorid
(Methyl-η3-amidinato)-(η5-3-methylcyclopentadienyl)-2,2-propandiyltitaniumdichlorid
(Tert-Butyl-η3-amidato)-(η5-fluorenyl)-2,2-propandiyl-zirkoniumdichlorid
(Phenyl-η3-amidato)-(η5-fluorenyl)-2-phenyl-2,2-ethandiyl-titaniumdichlorid
(Methyl-η3-amidato)-(η5-fluorenyl)-2,2-ethendiyl-zirkoniumdichlorid

(Tert-Butyl-N-methyl-η3-amidinato)-(η5-fluorenyl)-2,2-propandiylzirkoniumdichlorid
(Phenyl-N-trimethylsilyl-η3-amidinato)-(η5-fluorenyl)-2-phenyl-2,2-ethandiyltitanium-dichlorid
(Methyl-N-Trimethylsilyl-η3-amidinato)-(η5-fluorenyl)-2,2-ethendiyl-zirkoniumdichlorid

[(Tert-Butyl-η3-amidato)(dimethyl)(η5-fluorenyl)silan]zirkoniumdichlorid
[(Phenyl-η3-amidato)(methylphenyl)(η5-cyclopentadienyl)silan]zirkoniumdichlorid
[(Methyl-η3-amidato)(diphenyl)(η5-indenyl)silan]zirkoniumdichlorid

[(Tert-Butyl-N-methyl-η3-amidinato)(dimethyl)(η5-cyclopentadienyl)silan]zirkoniumdichlorid
[(Phenyl-N-trimethylsilyl-η3-amidinato)(methylphenyl)(η5-indenyl)silan]zirconiumdichlorid
[(Methyl-N-Trimethylsilyl-η3-amidinato)(diphenyl)(η5-fluorenyl)silan]zirkoniumdichlorid
(tert-Butyl-η3-amidato)-η5-cyclopentadienyl)-1,1-vinylidendiylzirkoniumbisdiethylamid
(tert-Butyl-η3-amidato)-η5-cyclopentadienyl)-1,1-vinylidendiylzirkoniumbisdimethylamid
(p-Tolyl-η3-amidato)-η5-cyclopentadienyl)-1,1-vinylidendiylzirkoniumbis(diethylamid)

Die Herstellung der erfindungsgemäßen Übergangsmetallverbindung soll durch das nachfolgende Syntheseschema veranschaulicht werden.

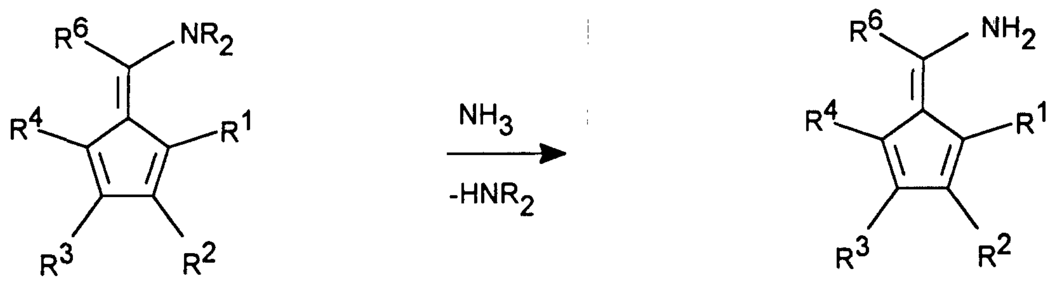


(II) (III)

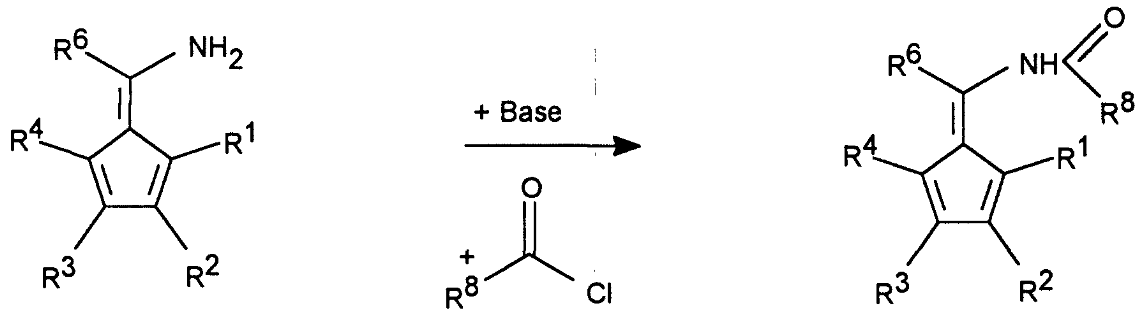


(III) (IV)

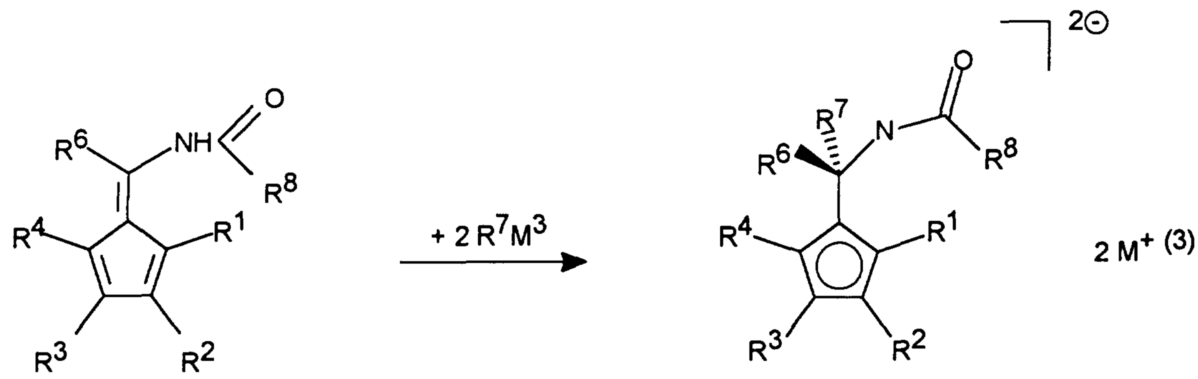


(IV) (V)

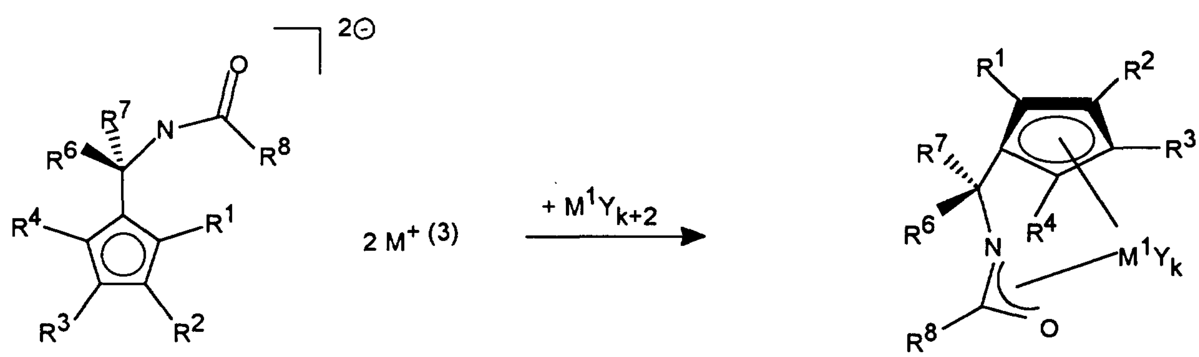


(V) (VI)

Die Verbindungen der Formel (II) können nach literaturbekannten Methoden hergestellt werden (Chem. Lett. 1990, 1683; Tetrahedron Lett. 1990, 31, 545; Org. Synth. 47, 52). Die Umsetzung der Verbindungen der Formel (II) zu den Verbindungen (III) erfolgt mit Ammoniak (Chem. Ber. 1964, 768, 539). Die Deprotonierung der Verbindung (III) kann mit einer beliebigen Base, insbesondere mit Methyllithium, Butyllithium, Lithiumbishexamethyldisilazid oder Kalium-tert-butylat, erfolgen. Die Umsetzung der durch diese Deprotonierung enstehenden Monolithiumverbindung kann mit Säurechloriden oder mit Nitrilen durchgeführt werden, so daß die Verbindungen (IV) oder (VII) generiert werden können. Die Umsetzung der Verbindungen (IV) oder (VII) mit 2 Äquivalenten einer nukleophilen und/oder basischen

Verbindung wie $R^7M^3$, wobei $M^3$ ein Metall der Gruppe Ia oder II a des Periodensystems der Elemente ist, führt zur Bildung der entsprechenden Verbindungen (V) oder (VIII). Die nachfolgende Umsetzung der Verbindungen (V) oder (VIII) in einem inertem Lösungmittel mit der entsprechenden Metallverbindung $M^1Y_{k+2}$, wobei k eine ganze Zahl von 1 bis 3 ist (z. B.Vanadiumtrichlorid, Zirkoniumtetrachlorid, Niobpentachlorid) ist im Prinzip bekannt und führt zur Bildung der erfindungsgemäßen Übergangsmetallverbindungen (VI) oder (IX). Geeignete inerte Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

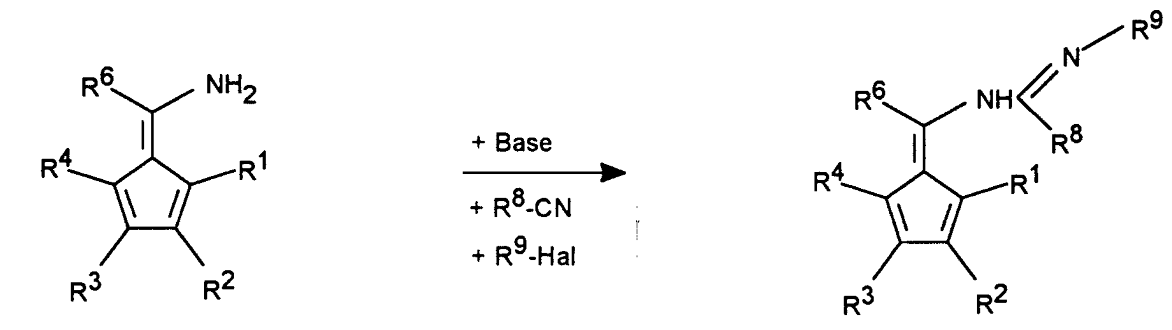


(III) (VII)

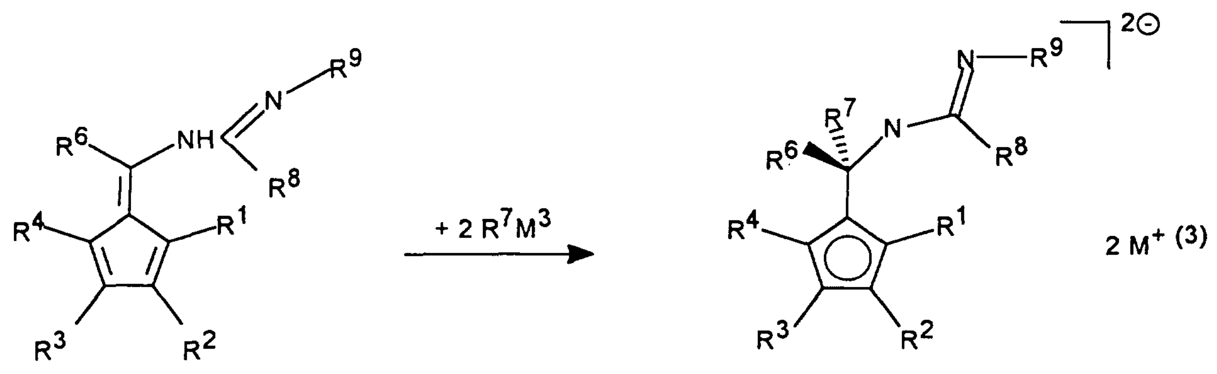


(VI I) (VIII)

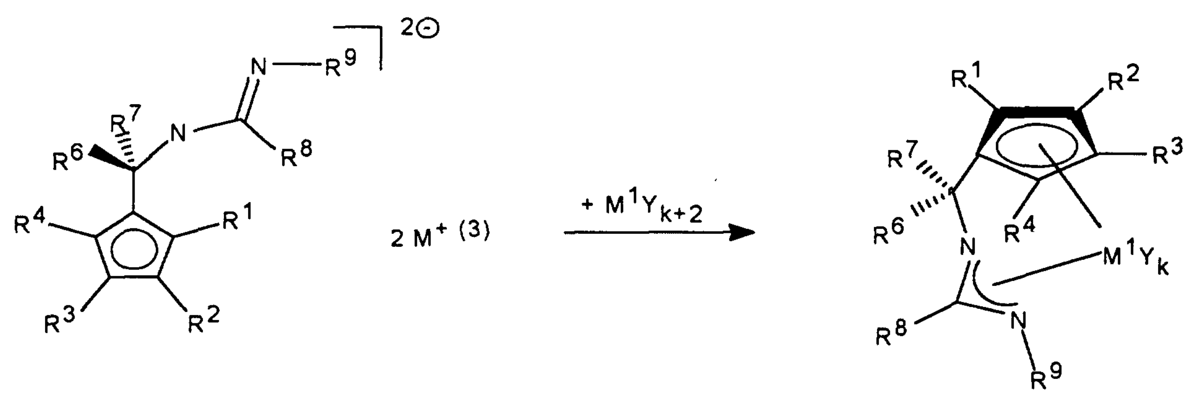


(VIII) (IX)

Die in den Formeln II bis IX verwendeten Symbole haben die gleiche Bedeutung wie in Formel I angegeben.

Die erfindungsgemäßen Übergangsmetallverbindungen sind hochaktive Katalysatorkomponenten für die Olefinpolymerisation. Je nach Substitutionsmuster der Liganden können die Übergangsmetallverbindungen als Isomerengemisch anfallen. Die Übergangsmetallverbindungen werden bevorzugt isomerenrein eingesetzt, können aber auch als Isomerengemisch eingesetzt werden.

Die vorliegende Erfindung betrifft weiterhin ein Verfahren zur Herstellung eines Polyolefins durch Polymerisation eines oder mehrerer Olefine in Gegenwart eines Katalysatorsystems, enthaltend mindestens eine erfindungsgemäße Übergangsmetallverbindung und mindestens einen Cokatalysator. Unter dem Begriff Polymerisation wird eine Homopolymerisation wie auch eine Copolymerisation verstanden.

Bevorzugt werden in dem erfindungsgemäßen Verfahren eines oder mehrere Olefine der Formel $R^a$-CH = CH-$R^b$ polymerisiert, worin $R^a$ und $R^b$ gleich oder verschieden sind und ein Wasserstoffatom oder einen Kohlenwasserstoffrest mit 1 bis 20 C-Atomen, insbesondere 1 bis 10 C-Atomen, bedeuten, oder $R^a$ und $R^b$ zusammen mit den sie verbindenden Atomen einen oder mehrere Ringe bilden. Beispiele für solche Olefine sind 1-Olefine mit 1 - 20 C-Atomen, wie Ethylen, Propen, 1-Buten, 1-Penten, 1-Hexen, 4-Methyl-1-penten oder 1-Octen, Styrol, cyclische oder acyclische Diene wie 1,3-Butadien, Isopren, 1,4-Hexadien, Norbornadien, Vinylnorbornen, 5-Ethylidennorbornen oder cyclische Monoolefine wie Norbornen oder Tetracyclododecen. Bevorzugt werden in dem erfindungsgemäßen Verfahren Ethylen oder Propylen homopolymerisiert oder Ethylen und Propylen miteinander und/oder mit einem oder mehreren acyclischen 1-Olefinen mit 4 bis 20 C-Atomen und/oder mit einem oder mehreren Dienen mit 4 bis 20 C-Atomen, wie 1,3-Butadien, copolymerisiert.

Die Polymerisation wird bevorzugt bei einer Temperatur von -78 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasenpolymerisation und die Suspensionspolymerisation.

Bevorzugt enthält der in dem erfindungsgemäßen Verfahren eingesetzte Katalysator eine Übergangsmetallverbindung. Es können auch Mischungen zweier oder mehrerer Übergangsmetallverbindungen eingesetzt werden, z. B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität die neutrale Übergangsmetallverbindung in ein Kation überführen und dieses stabilisieren kann ("labile Koordination"). Darüber hinaus soll der Cokatalysator oder das aus ihm gebildete Anion keine weiteren Reaktionen mit dem gebildeten Kation eingehen (EP 427 697). Als Cokatalysator wird bevorzugt eine Aluminiumverbindung und/oder eine Borverbindung verwendet.

Die Borverbindung hat bevorzugt die Formel $R^{12}_xNH_{4-x}BR^{13}_4$, $R^{12}_xPH_{4-x}BR^{13}_4$, $R^{12}_3CBR^{13}_4$ oder $BR^{13}_3$, worin x eine Zahl von 1 bis 4, bevorzugt 3, bedeutet, die Reste $R^{12}$ gleich oder verschieden, bevorzugt gleich sind, und $C_1$-$C_{10}$-Alkyl oder $C_6$-$C_{18}$-Aryl sind, oder zwei Reste $R^{12}$ zusammen mit dem sie verbindenden Atomen einen Ring bilden, und die Reste $R^{13}$ gleich oder verschieden, bevorzugt gleich sind, und $C_6$-$C_{18}$-Aryl sind, das durch Alkyl, Haloalkyl oder Fluor substituiert sein kann. Insbesondere steht $R^{12}$ für Ethyl, Propyl, Butyl oder Phenyl und $R^{13}$ für Phenyl, Pentafluorphenyl, 3,5-Bistrifluormethylphenyl, Mesityl, Xylyl oder Tolyi (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel Xa für den linearen Typ und/oder der Formel Xb für den cyclischen Typ verwendet,

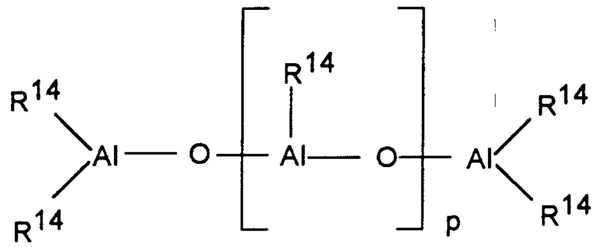

(Xa)

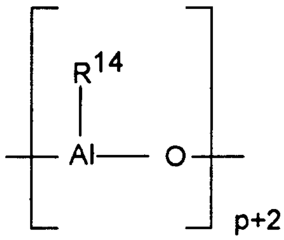

(Xb)

,wobei in den Formeln Xa und Xb die Reste $R^{14}$ gleich oder verschieden sind und Wasserstoff oder eine $C_1$-$C_{20}$-Kohlenwasserstoffgruppe wie eine $C_1$-$C_{18}$-Alkylgruppe, eine $C_6$-$C_{18}$-Arylgruppe oder Benzyl bedeuten und p eine ganze Zahl von 2 bis 50, bevorzugt 10 bis 35 bedeutet.

Bevorzugt sind die Reste $R^{14}$ gleich und bedeuten Wasserstoff, Methyl, Isobutyl, Phenyl oder Benzyl, besonders bevorzugt Methyl.

Sind die Reste $R^{14}$ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste $R^{14}$) enthalten sind.

Die Verfahren zur Herstellung der Aluminoxane sind bekannt. Die genaue räumliche Struktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Übergangsmetallverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Übergangsmetallverbindung wird vorzugsweise in Lösung vorgenommen. Bevorzugt wird dabei die Übergangsmetallverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Die Übergangsmetallverbindung kann in der gleichen Konzentration eingesetzt werden, vorzugsweise wird es jedoch in einer Menge von $10^{-4}$ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 150°C, vorzugsweise 0 bis 80°C.

Die Übergangsmetallverbindung wird bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Das Aluminoxan, wird bevorzugt in einer Konzentration von $10^{-6}$ bis $10^{-1}$ mol, vorzugsweise $10^{-5}$ bis $10^{-2}$ mol pro $dm^3$ Lösemittel bzw. pro $dm^3$ Reaktorvolumen verwendet. Die anderen genannten Cokatalysatoren werden in etwa äquimolaren Mengen zu der Übergangsmetallverbindung verwendet.

Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebundenbeispielsweise als Kristallwasser) in einem inerten Lösungsmittel (wie beispielsweise Toluol) umgesetzt wird. Zur Herstellung eines Aluminoxans mit verschiedenen Resten $R^{14}$ werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Übergangsmetallverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Übergangsmetallverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Übergangsmetallverbindung zunächst mit dem Träger und anschließend mit dem Cokatalysator umgesetzt werden. Es kann auch zunächst der Cokatalysator geträgert werden und anschließend mit der Übergangsmetallverbindung umgesetzt werden. Auch ist es möglich das Reaktionsprodukt von Übergangsmetallverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung eines geträgerten Cokatalysators kann beispielsweise wie in EP 567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit der Übergangsmetallverbindung umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung eines geträgerten Cokatalysators kann beispielsweise wie in EP 578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf. Im Prinzip sind auch andere Reaktoren geeignet.

Weitere Möglichkeiten der Herstellung eines geträgerten Cokatalysators sind in EP 578 838 beschrieben. Danach wird die erfindungsgemäße Übergangsmetallverbindungen auf den geträgerten Cokatalysator aufgebracht, indem das gelöste Übergangsmetallverbindung mit dem geträgerten Cokatalysator gerührt wird. Das Lösemittel wird entfernt und durch einen Kohlenwasserstoff ersetzt, in dem sowohl Cokatalysator als auch das Übergangsmetallverbindung unlöslich sind.

Die Reaktion zu dem geträgerten Katalysatorsystem erfolgt bei einer Temperatur von -20 bis +120°C, bevorzugt 0 bis 100°C, besonders bevorzugt bei 15 bis 40°C. Das Übergangsmetallverbindung wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Übergangsmetallverbindungs in einem inerten Lösungsmittel wie Toluol, Hexan, Heptan, Dichlormethan oder mit dem feingemahlenen Feststoff des Übergangsmetallverbindungs zusammengebracht wird. Umgekehrt kann auch eine Lösung des Übergangsmetallverbindungs mit dem Feststoff des Cokatalysators umgesetzt werden.

Die Umsetzung erfolgt durch intensives Mischen, beispielsweise durch Verrühren bei einem molaren Al/$M^1$-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.
Im Laufe der Reaktionszeit zur Herstellung des geträgerten Katalysatorsystems treten insbesondere bei der Verwendung der erfindungsgemäßen Übergangsmetallverbindung mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Übergangsmetallverbindung, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (aus einer erfindungsgemäßen Übergangsmetallverbindung und einem geträgerten Cokatalysator beziehungsweise aus einer erfindungsgemäßen Übergangsmetallverbindung und einer aluminiumorganischen Verbindung auf einem Polyolefinpulver in feinverteilter Form), kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/$M^1$-Verhältnis klein gewählt werden.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die nachfolgenden Beispiele dienen zur näheren Erläuterung der Erfindung.

Herstellung und Handhabung organometallischer Verbindungen erfolgten unter Ausschluß von Luft und Feuchtigkeit unter Argon-Schutzgas (Schlenk-Technik). Alle benötigten Lösungsmittel wurden vor Gebrauch durch mehrstündiges Sieden über einem geeigneten Trockenmittel und anschließende Destillation unter Argon absolutiert.

Die Verbindungen wurden mit $^1$H-NMR, $^{13}$C-NMR- und IR-Spektroskopie charakterisiert.

Beispiel 1:

(Tert-Butyl-$\eta^3$-amidato)-($\eta^5$-cyclopentadienyl)-2,2-propandiyl-zirkoniumdichlorid (1)

Synthese von N-6-(6'-Methylfulvenyl)pivalsäureamid

Unter Eiskühlung wird zu einer Lösung von 5,0 g (46,7 mmol) 6-Amino-6'-methylfulven in 3 ml Triethylamin und 30 ml Tetrahydrofuran 1 Äquivalent Pivalsäurechlorid zugegeben. Die Mischung wird für 24 h gerührt und anschließend filtriert. Das Filtrat wird vom Lösungsmittel befreit und der Rückstand aus Diethylether kristallisiert.
$^1$H NMR (200 MHz, $CDCl_3$): 8,2 (s, 1H, NH); 6,6 - 6,3 (m, 4H, Cp-H); 2,7 (s, 3H, $CH_3$); 1,3 (s, 9H, $CH_3$).

Synthese von (Tert-Butyl-amidato)-(cyclopentadienyl)-2,2-propandiyl-dilithium.

Bei -30°C werden zu einer Suspension von 0,5 g Kupferiodid in 50 ml Diethylether zwei Äquivalente einer etherischen Methyllithiumlösung gegeben (10 ml, 3,0 mmol). Die klare Lösung wird auf 0°C erwärmt und anschließend werden 0,3 g (1.48 mmol) N-6-(6'-Methylfulvenyl)pivalsäureamid in 50 ml Diethylether zugetropft. Die Suspension wird für 24 h gerührt, filtriert und das Lösungsmittel im Vakuum entfernt.

Synthese von (Tert-Butyl-$\eta^3$-amidato)-($\eta^5$-cyclopentadienyl)-2,2-propandiylzirkoniumdi-chlorid

0,3 g (Tert-Butyl-amidato)-(cyclopentadienyl)-2,2-propandiyl-dilithium (1,0 mmol) wird in Diethylether suspendiert und mit einer äquimolaren Menge $ZrCl_4$ versetzt (0,35 g; 1,0 mmol). Nach 12 h Reaktionszeit wird das Lösungsmittel im Vakuum entfernt und der Rückstand mit Dichlormethan extrahiert. Das Filtrat wird bis zur Trockne eingeengt und man erhält die Verbindung (1) in 45%iger Ausbeute.
$^1$H NMR (200 MHz, $C_6D_6$): 5,8 - 5,4 (m, 4H, Cp-H); 1,6 (s, 3H, $CH_3$); 1,3 (s, 3H, $CH_3$); 1,2 (s, 9H, $CH_3$).

Beispiel 2: (Tert-Butyl-$\eta^3$-amidato)-($\eta^5$-cyclopentadienyl)-2,2-ethendiylzirkoniumdichlorid (2)

Zu 0,38 g (2,0 mmol) N-6-(6'-Methylfulvenyl)pivalsäureamid in 50 ml

Diethylether werden 2 Äquivalente Lithiumhexamethyldisilazid in 20 ml Diethylether zugetropft. Die Suspension wird für 24 h gerührt, filtriert und der Rückstand mit Pentan gewaschen.

Synthese von (Tert-Butyl-$\eta^3$-amidato)-($\eta^5$-cyclopentadienyl)-2,2-ethendiylzirkoniumdi-chlorid

0,3 g (Tert-Butyl-amidato)-(cyclopentadienyl)-2,2-ethendiyl-dilithium (1,0 mmol) wird in Tetrahydrofuran gelöst und mit einer äquimolaren Menge $ZrCl_4(THF)_2$ versetzt (0,35 g; 1,0 mmol). Nach 12 h Reaktionszeit wird das Lösungsmittel im Vakuum entfernt und der Rückstand mit Pentan extrahiert. Das Filtrat wird bis zur Trockne eingeengt und man erhält die Verbindung (2) in 74%iger Ausbeute.
$^1$H NMR (200 MHz, $C_4D_8O$): 6,4 - 5,8 (m, 4H, Cp-H); 4,8; 4,7 (je m, je 1H, CH); 1,1 (s, 9H, $CH_3$).

Beispiel 3: (p-Tolyl-$\eta^3$-amidato)-($\eta^5$-cyclopentadienyl)-2,2-ethendiylzirkoniumdichlorid

Synthese von N-6-(6 '-Methylfulvenyl)-p-tolylsäureamid

Unter Eiskühlung wird zu einer Lösung von 5,0 g (46,7 mmol) 6-Amino-6'-methylfulven in 3 ml Triethylamin und 30 ml Tetrahydrofuran 1 eq. p-Tolylsäurechlorid zugegeben. Die Mischung wird für 24 h gerührt und anschließend filtriert. Das Filtrat wird vom Lösungsmittel befreit und der Rückstand aus Diethylether kristallisiert.
$^1$H NMR (200 MHz, $CDCl_3$): 8,2 (s, 1H, NH); 7,7 - 7,0 (m, 4H, arom. H); 6,6-6,3 (m, 4H, Cp-H); 2,7 (s, 3H, $CH_3$); 2,3 (s, 3H, $CH_3$).

Synthese von (p-Tolyl-amidato)-(cyclopentadienyl)-2,2-ethendiyl-dilithium.

Zu 0,38 g (2,0 mmol) N-6-(6'-Methylfulvenyl)-p-tolylsäureamid in 50 ml Diethylether werden 2 Äquivalente Lithiumhexamethyldisilazid in 20 ml Diethylether zugetropft. Die Suspension wird für 24 h gerührt, filtriert und der Rückstand mit Pentan gewaschen.

Synthese von (p-Tolyl-$\eta^3$-amidato)-($\eta^5$-cyclopentadienyl)-2,2-ethendiylzirkoniumdichlorid

0,3 g (p-Tolyl-amidato)-(cyclopentadienyl)-2,2-ethendiyl-dilithium (1,26 mmol) wird in Tetrahydrofuran gelöst und mit einer äquimolaren Menge $ZrCl_4(THF)_2$ versetzt (0,47 g; 1,26 mmol). Nach 12 h Reaktionszeit wird das Lösungsmittel im Vakuum entfernt und der Rückstand mit Pentan extrahiert. Das Filtrat wird bis zur Trockne eingeengt und man erhält die Verbindung C in 78%iger Ausbeute.
$^1$H NMR (200 MHz, $C_4D_8O$): 7,8 - 7,0 (m, 4H, arom. H); 6,6 - 5,9 (m, 4H, Cp-H); 4,9; 4,8 (je m, je 1H, CH); 2,3 (s, 3H, $CH_3$).

Beispiel 4: (p-Tolyl-$\eta^3$-amidato)-($\eta^5$-cyclopentadienyl)-2,2-ethendiyltitaniumdichlorid

Synthese von (p-Tolyl-$\eta^3$-amidato)-($\eta^5$-cyclopentadienyl)-2,2-ethendiyltitaniumdichlorid

0,3 g (p-Tolyl-amidato)-(cyclopentadienyl)-2,2-ethendiyl-dilithium (1,26 mmol) wird in Tetrahydrofuran gelöst und mit einer äquimolaren Menge $TiCl_4(THF)_2$ versetzt (0,41 g; 1,26 mmol). Nach 12 h Reaktionszeit wird das Lösungsmittel im Vakuum entfernt und der Rückstand mit Pentan extrahiert. Das Filtrat wird bis zur Trockne eingeengt und man erhält die Verbindung C in 78%iger Ausbeute.
$^1$H NMR (200 MHz, $C_4D_8O$): 7,8 - 6,9 (m, 4H, arom. H); 6,7 - 5,9 (m, 4H, Cp-H); 5,0; 4,9 (je m, je 1H, CH); 2,3 (s, 3H, $CH_3$).

Beispiel 5: (tert-Butyl-$\eta^3$-amidato)-$\eta^5$-cyclopentadienyl)-1,1-vinylidendiylzirkoniumbis(diethyl amid)

Bei -20°C werden 308 mg (1.99 mmol) N-6-(6'-Methyl-fulvenyl)pivalsäureamid in 20 ml Diethylether mit 2 eq Lithiumhexamethyldisilazid versetzt und 4 Stunden bei Raumtemperatur nachgerührt. Der entstandene Feststoff wird abfiltriert, mit 10 ml Diethylether sowie mit 20 ml Pentan gewaschen. Nach Trocknung im Vakuum wird das erhaltene Bislithiumsalz als Suspension in 30ml THF mit 1 eq Dichlorobis(diethylamido)zirkonium (Lösung in 30 ml THF) versetzt und 2 Stunden bei Raumtemperatur nachgerührt. Das Solvens wird im Vakuum entfernt und der Rückstand mit Pentan aufgerührt. Nach Filtration und Abziehen des Lösungsmittels erhält man den Komplex in 70% Ausbeute.
$^1$H-NMR (200 MHz, $C_6D_6$): 5.97 (m, 1H), 5.90 (m, 1H), 5.25 (d, 1H, 1.58 Hz), 5.00 (d, 1H, 1.58 Hz), 3.12 (q, 8 H, 7.42 Hz), 1.38 (s, 9H), 0.88 (tr, 12H, 7.42 Hz)

Beispiel 6: (p-Tolyl-$\eta^3$-amidato)-$\eta^5$-cyclopentadienyl)-1,1-vinylidendiylzirkoniumbis(diethyl amid)

N-6-(6'-Methyl-fulvenyl)-p-tolylsäureamid wird analog Beispiel 5 umgesetzt. Man erhält den Komplex in 65% Ausbeute.
$^1$H-NMR (200 MHz, $C_4D_8O$): 7.96 (d, 2H), 7.11 (d, 2H), 6.39 (m, 2H), 6.07 (m, 2H), 4.82 (d, 1H, 2.20 Hz), 4.80 (d, 1H, 2.23 Hz), 3.30 (q, 4H, 6.96 Hz ), 3.29 (q, 4H, 6.96 Hz), 2.33 (s, 3H), 1.01 (t, 12H, 6.93 Hz).

**Patentansprüche**

1. Übergangsmetallverbindung der Formel I

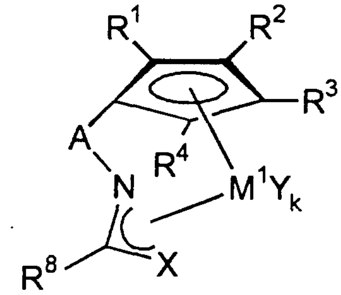

Formel I

worin $M^1$ ein Metall der Gruppe IIIb, IVb oder Vb des Periodensystems der Elemente ist,

$R^1$, $R^2$, $R^3$ und $R^4$ gleich oder verschieden sind und ein Wasserstoffatom, ein Halogenatom, eine $C_1$-$C_{40}$-kohlenwasserstoffhaltige Gruppe, einen $-SiR^5_3$, $-NR^5_2$, $-Si(OR^5)_3$, $-Si(SR^5)_3$ oder $-PR^5_2$-Rest bedeuten, worin $R^5$ gleich oder verschieden ein Halogenatom, eine $C_1$-$C_{10}$ Alkylgruppe oder eine $C_6$-$C_{10}$-Arylgruppe sind, oder zwei oder mehrere Reste $R^1$, $R^2$, $R^3$ oder $R^4$ zusammen mit den sie verbindenden Atomen ein Ringsystem bilden,

Y gleich oder verschieden sind und ein Wasserstoffatom, eine $C_1$-$C_{40}$-kohlenwasserstoffhaltige Gruppe, eine OH-Gruppe, ein Halogenatom oder eine $NR^5_2$-Gruppe, worin $R^5$ gleich oder verschieden ein Halogenatom, eine $C_1$-$C_{10}$ Alkylgruppe oder eine $C_6$-$C_{10}$-Arylgruppe sind, bedeuten,

k eine ganze Zahl ist, die der Wertigkeit des Übergangsmetallatoms $M^1$ minus zwei entspricht und im Fall, wenn Y eine Butadieneinheit ist, k gleich 1 ist,

A eine Verbrückung ist,

$R^8$ ein Wasserstoffatom, ein Halogenatom, eine $C_1$-$C_{40}$-kohlenstoffhaltige Gruppe, einen $-SiR^5_3$, $-NR^5_2$, $-Si(OR^5)_3$, $-Si(SR^5)_3$ oder $-PR^5_2$-Rest bedeutet, worin $R^5$ gleich oder verschieden ein Halogenatom, eine $C_1$-$C_{10}$ Alkylgruppe oder eine $C_6$-$C_{10}$-Arylgruppe sind, und

X ein Element der Gruppe Va oder VIa des Periodensystems der Elemente bedeutet, wobei wenn X ein Element der Gruppe Va ist, X einen Rest $R^9$ trägt, der ein Wasserstoffatom, ein Halogenatom, eine $C_1$-$C_{40}$-kohlenstoffhaltige Gruppe, einen $-SiR^5_3$, $-NR^5_2$, $-Si(OR^5)_3$, $-Si(SR^5)_3$ oder $-PR^5_2$-Rest bedeutet, worin $R^5$ gleich oder verschieden ein Halogenatom, eine $C_1$-$C_{10}$ Alkylgruppe oder eine $C_6$-$C_{10}$-Arylgruppe sind.

**2.** Übergangsmetallverbindung der Formel I, gemäß Anspruch 1, worin A

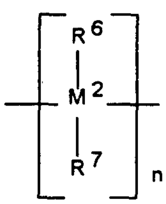
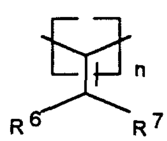
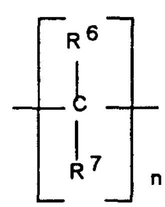
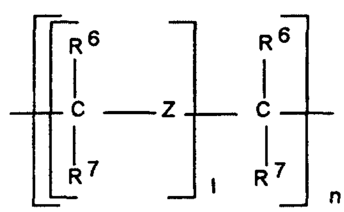

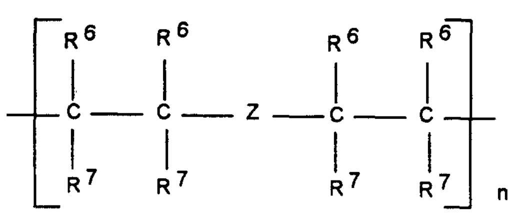

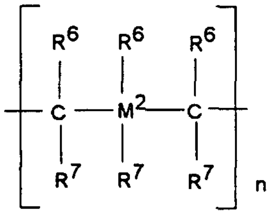 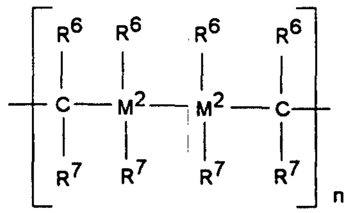 oder 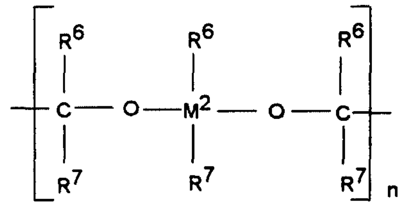

ist, wobei n eine ganze Zahl von 1 bis 20 ist, l eine ganze Zahl von 1 bis 20 ist, Z gleich $=NR^5$, $=CO$, $=PR^5$, $=P(O)R^5$, $=SO$, $SO_2$, O oder S ist, worin $R^5$ gleich oder verschieden ein Halogenatom, eine $C_1$-$C_{10}$ Alkylgruppe oder eine $C_6$-$C_{10}$-Arylgruppe sind, $R^6$ und $R^7$ gleich oder verschieden sind und ein Wasserstoffatom, ein Halogenatom, eine $C_1$-$C_{40}$-kohlenwasserstoffhaltige Gruppe oder jeweils zwei Reste $R^6$, jeweils zwei Reste $R^7$, oder je ein Rest $R^6$ und $R^7$ jeweils mit den sie verbindenen Atomen ein Ringsystem bilden und $M^2$ Silizium, Germanium oder Zinn ist.

**3.** Übergangsmetallverbindung der Formel I, gemäß Anspruch 1 oder 2, worin

$M^1$ ein Metall der Gruppe IVb des Periodensystems der Elemente wie Titan, Zirkonium oder Hafnium ist,
$R^1$, $R^2$, $R^3$ und $R^4$ gleich oder verschieden sind und ein Wasserstoffatom oder eine $C_1$-$C_{10}$-kohlenwasserstoffhaltige Gruppe sind oder zwei oder mehrere Reste $R^1$, $R^2$, $R^3$ oder $R^4$ zusammen mit den sie verbindenden Atomen ein Ringsystem bilden,
Y gleich sind und eine $C_1$-$C_{10}$-kohlenwasserstoffhaltige Gruppe oder ein Halogenatom bedeuten,
A

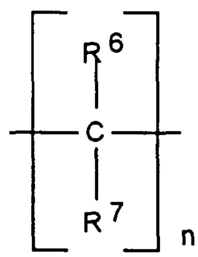

oder

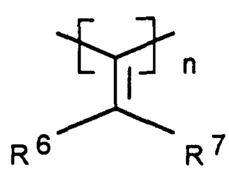

ist, wobei n eine ganze Zahl von 1 bis 8 ist,
$R^6$ und $R^7$ gleich oder verschieden sind und ein Wasserstoffatom oder eine $C_1$-$C_{10}$-kohlenwasserstoffhaltige Gruppe sind oder jeweils zwei Reste $R^6$, jeweils zwei Reste $R^7$, oder je ein Rest $R^6$ und $R^7$ jeweils mit den sie verbindenen Atomen ein Kohlenwasserstoffringsystem bilden,
$R^8$ eine $C_1$-$C_{10}$-Kohlenwasserstoffgruppe ist, und
X gleich ein Element der Gruppe Va oder Gruppe VIa des Periodensystems der Elemente bedeutet, wobei wenn X ein Element der Gruppe Va ist, X einen Rest $R^9$ trägt, der ein Wasserstoffatom oder eine $C_1$-$C_{10}$-kohlenwasserstoffhaltige Gruppe ist, oder einen $-SiR^5_3$, $-NR^5_2$, $-Si(OR^5)_3$, $-Si(SR^5)_3$ oder $-PR^5_2$-Rest bedeutet, worin $R^5$ gleich oder verschieden eine $C_1$-$C_{10}$ Alkylgruppe oder eine $C_6$-$C_{10}$-Arylgruppe sind.

**4.** Übergangsmetallverbindung der Formel I gemäß einem oder mehreren der Ansprüche 1, 2 oder 3, worin

$M^1$ gleich Titanium oder Zirkonium ist,
$R^1$, $R^2$, $R^3$ und $R^4$ gleich oder verschieden sind und ein Wasserstoffatom, eine $C_1$-$C_4$-Alkylgruppe oder eine $C_6$-$C_{10}$-Arylgruppe bedeuten, oder $R^1$ und $R^2$ oder $R^3$ und $R^4$ oder $R^2$ und $R^3$ mit den sie verbindenen Atomen ein aromatisches Kohlenwasserstoffringsystem bilden,
Y gleich sind insbesondere Methyl, Phenyl oder Chlor bedeuten,
A gleich

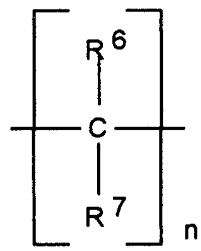

oder

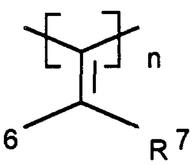

ist, $R^6$ und $R^7$ gleich oder verschieden sind und ein Wasserstoffatom, eine $C_1$-$C_4$-Alkylgruppe oder eine $C_6$-$C_{10}$-Arylgruppe sind,
$R^8$ eine $C_1$-$C_4$-Alkylgruppe oder eine $C_6$-$C_{10}$-Arylgruppe sind,
X gleich Stickstoff oder Sauerstoff bedeutet, wobei X im Falle von Stickstoff einen Rest $R^9$ trägt, der ein Wasserstoffatom, eine $C_1$-$C_4$-Alkylgruppe, eine $C_6$-$C_{10}$-Arylgruppe, $-SiR^5_3$ oder $-Si(OR^5)_3$ bedeutet, worin $R^5$ gleich oder verschieden eine $C_1$-$C_4$ Alkylgruppe oder eine $C_6$-$C_{10}$-Arylgruppe bedeuten.

**5.** Verfahren zur Herstellung einer Übergangsmetallverbindung der Formel I gemäß einem oder mehreren der Ansprüche 1 bis 4, enthaltend die Schritte

a) Umsetzung einer Verbindung der Formel IV oder VII

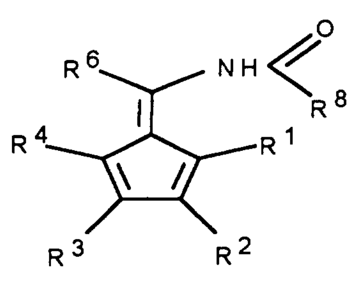

(IV)

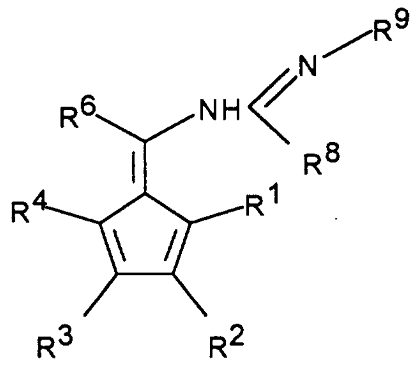

(VI I)

mit einer nukleophilen oder basischen Verbindung und
b) Umsetzung des Reaktionsproduktes mit einer Metallverbindung $M^1Y_{k+2}$.

**6.** Katalysator, enthaltend

a) mindestens eine Übergangsmetallverbindung der Formel I, gemäß einem oder mehreren der Ansprüche 1 bis 4 und
b) mindestens einen Cokatalysator.

**7.** Katalysator gemäß Anspruch 6, zusätzlich enthaltend einen Träger.

**8.** Verfahren zur Herstellung eines Olefinpolymers durch Polymerisation eines oder mehrerer Olefine in Gegenwart eines Katalysators gemäß Anspruch 6 oder 7.

**9.** Verwendung eines Katalysators gemäß Anspruch 6 oder 7 zur Herstellung eines Olefinpolymeren.

**10.** Olefinpolymer, herstellbar nach dem Verfahren gemäß Anspruch 8.

**Claims**

**1.** A transition metal compound of the formula I

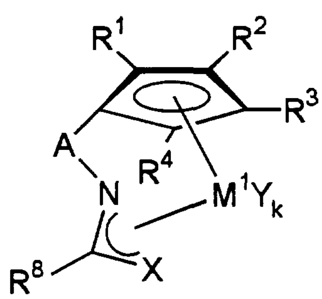

Formula I

where $M^1$ is a metal of group IIIb, IVb or Vb of the Periodic Table of the Elements,
$R^1$, $R^2$, $R^3$ and $R^4$ are identical or different and are each a hydrogen atom, a halogen atom, a $C_1$-$C_{40}$-hydrocarbon-containing group, an $-SiR^5_3$, $-NR^5_2$, $-Si(OR^5)_3$, $-Si(SR^5)_3$ or $-PR^5_2$ radical, where $R^5$ are identical or different and are each a halogen atom, a $C_1$-$C_{10}$-alkyl group or a $C_6$-$C_{10}$-aryl group, or two or more radicals $R^1$, $R^2$, $R^3$ or $R^4$ together with the atoms connecting them form a ring system,
Y are identical or different and are each a hydrogen atom, a $C_1$-$C_{40}$-hydrocarbon-containing group, an OH group, a halogen atom or an $NR^5_2$ group, where $R^5$ are identical or different and are each a halogen atom, a $C_1$-$C_{10}$-alkyl group or a $C_6$-$C_{10}$-aryl group,
k is an integer which corresponds to the valence of the transition metal atom $M^1$ minus two and if Y is a butadiene unit, k is 1,
A is a bridge,
$R^8$ is a hydrogen atom, a halogen atom, a $C_1$-$C_{40}$-group, an $-SiR^5_3$, $-NR^5_2$, $-Si(OR^5)_3$, $-Si(SR^5)_3$ or $-PR^5_2$ radical, where $R^5$ are identical or different and are each a halogen atom, a $C_1$-$C_{10}$-alkyl group or a C6-$C_{10}$-aryl group, and
X is an element of group Va or Via of the Periodic Table of the Elements, where if X is an element of group Va, X bears a radical $R^9$ which is a hydrogen atom, a halogen atom, a $C_1$-$C_{40}$-group, an $-SiR^5_3$, $-NR^5_2$, $-Si(OR^5)_3$, $-Si(SR^5)_3$ or $-PR^5_2$ radical, where $R^5$ are identical or different and are each a halogen atom, a $C_1$-$C_{10}$-alkyl group or a $C_6$-$C_{10}$-aryl group.

**2.** A transition metal compound of the formula I as claimed in claim 1,

wherein A is

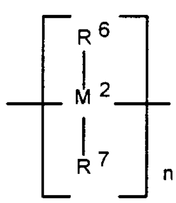

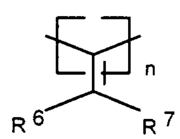

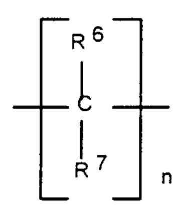

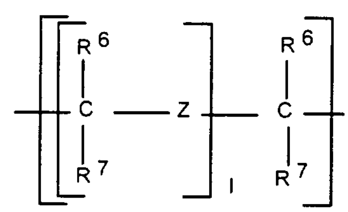

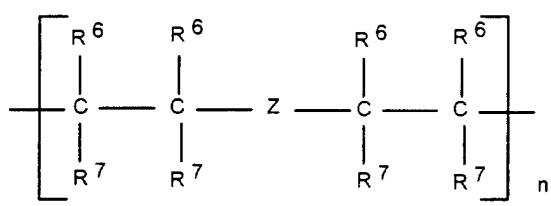

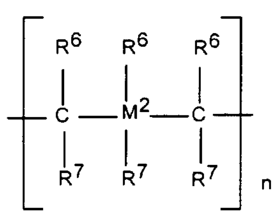

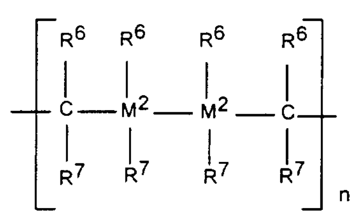

or

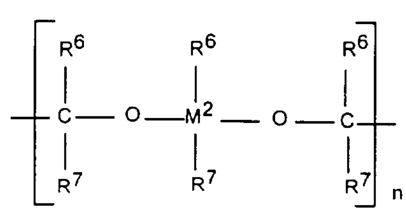

where n is an integer from 1 to 20, is an integer from 1 to 20, Z is
$-NR^5$, $-CO$, $-PR^5$, $-P(O)R^5$, $-SO$, $SO_2$, O or S, where $R^5$ are identical or different and are each a halogen atom, a $C_1$-$C_{10}$-alkyl group or a $C_6$-$C_{10}$-aryl group,
$R^6$ and $R^7$ are identical or different and are each a hydrogen atom, a halogen atom, a $C_1$-$C_{40}$-hydrocarbon-containing group or in each case two radicals $R^6$, in each case two radicals $R^7$, or one of each of the radicals $R^6$ and $R^7$ in each case together with the atoms connecting them form a ring system and $M^2$ is silicon, germanium or tin.

**3.** A transition metal compound of the formula I as claimed in claim 1 or 2,

$M^1$ is a metal of group IVb of the Periodic Table of the Elements, for example titanium, zirconium or hafnium, $R^1$, $R^2$, $R^3$ and $R^4$ are identical or different and are each a hydrogen atom or a $C_1$-$C_{10}$-hydrocarbon-containing group or two or more radicals $R^1$, $R^2$, $R^3$ or $R^4$ together with the atoms connecting them form a ring system,
Y are identical and are each a $C_1$-$C_{10}$-hydrocarbon-containing group or a halogen atom,
A is

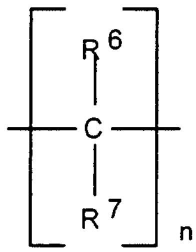

or

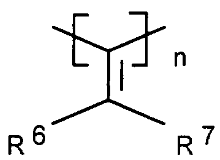

where n is an integer from 1 to 8,
$R^6$ and $R^7$ are identical or different and are each a hydrogen atom or a $C_1$-$C_{10}$-hydrocarbon-containing group or in each case two radicals $R^6$, in each case two radicals $R^7$, or one of each of the radicals $R^6$ and $R^7$ in each case together with the atoms connecting them form a hydrocarbon ring system,
$R^8$ is a $C_1$-$C_{10}$-hydrocarbon group, and
X is an element of group Va or group Via of the Periodic Table of the Elements, where if X is an element of group Va, X bears a radical $R^9$ which is a hydrogen atom or a $C_1$-$C_{10}$-hydrocarboncontaining group, or an $-SiR^5_3$, $-NR^5_2$, $-Si(OR^5)_3$, $-Si(SR^5)_3$ or $-PR^5_2$ radical, where $R^5$ are identical or different and are each a $C_1$-$C_{10}$-alkyl group or a $C_6$-$C_{10}$-aryl group.

**4.** A transition metal compound of the formula I as claimed in one or more of claims 1, 2 or 3, wherein

$M^1$ is titanium or zirconium,
$R^1$, $R^2$, $R^3$ and $R^4$ are identical or different and are each a hydrogen atom, a $C_1$-$C_4$-alkyl group or a $C_6$-$C_{10}$-aryl group, or $R^1$ and $R^2$ or $R^3$ and $R^4$ or $R^2$ and $R^3$ together with the atoms connecting them form an aromatic hydrocarbon ring system,
Y are identical and are, in particular, methyl, phenyl or chlorine,
A is

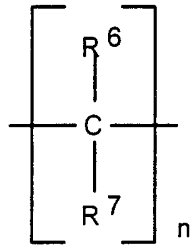

or

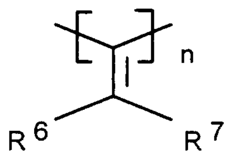

where $R^6$ and $R^7$ are identical or different and are each a hydrogen atom, a $C_1$-$C_4$-alkyl group or a $C_6$-$C_{10}$-aryl group,
$R^8$ is a $C_1$-$C_4$-alkyl group or a $C_6$-$C_{10}$-aryl group,
X is nitrogen or oxygen, where if X is nitrogen it bears a radical $R^9$ which is a hydrogen atom, a $C_1$-$C_4$-alkyl group, a $C_6$-$C_{10}$-aryl group, $-SiR^5_3$ or $-Si(OR^5)_3$, where $R^5$ are identical or different and are each a $C_1$-$C_4$-alkyl group or a $C_6$-$C_{10}$-aryl group.

**5.** A process for preparing a transition metal compound of the formula I as claimed in one or more of claims 1 to 4, which comprises the steps

a) reacting a compound of the formula IV or VII

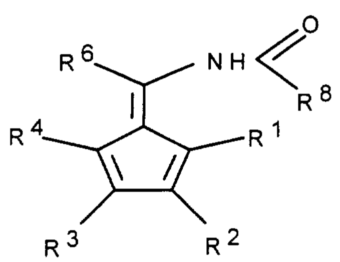

(IV)

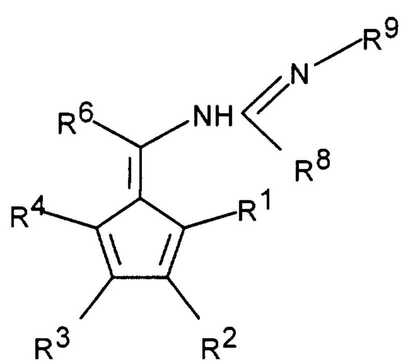

(VI I)

with a nucleophilic or basic compound and
b) reacting the reaction product with a metal compound $M^1Y_{k+2}$.

**6.** A catalyst comprising

a) at least one transition metal compound of the formula I as claimed in one or more of claims 1 to 4 and
b) at least one cocatalyst.

**7.** A catalyst as claimed in claim 6 further comprising a support.

**8.** A process for preparing an olefin polymer by polymerization of one or more olefins in the presence of a catalyst as claimed in claim 6 or 7.

**9.** The use of a catalyst as claimed in claim 6 or 7 for the preparation of an olefin polymer.

**10.** An olefin polymer able to be prepared by the process as claimed in claim 8.

**Revendications**

**1.** Composé de métal de transition de la formule I :

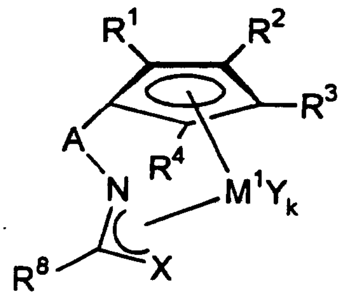

Formule I

dans laquelle $M^1$ représente un métal du groupe IIIb, IVb ou Vb du Système Périodique des Eléments, $R^1$, $R^2$, $R^3$ et $R^4$ sont identiques ou différents et représentent un atome d'hydrogène, un atome d'halogène, un groupe contenant de l'hydrocarbure en $C_1$-$C_{40}$, un radical $-SiR^5_3$, $-NR^5_2$, $-Si(OR^5)_3$, $-Si(SR^5)_3$ ou $-PR^5_2$, où $R^5$ sont identiques ou différents et représentent un atome d'halogène, un groupe alkyle en $C_1$-$C_{10}$ ou un groupe aryle en $C_6$-$C_{10}$, deux ou plusieurs radicaux $R^1$, $R^2$, $R^3$ ou $R^4$ pouvant former conjointement avec les atomes qui les relient un système cyclique,
Y sont identiques ou différents et représentent un atome d'hydrogène, un groupe contenant de l'hydrocarbure en $C_1$-$C_{40}$, un groupe OH, un atome d'halogène ou un groupe $NR^5_2$, où $R^5$ sont identiques ou différents et représentent un atome d'halogène, un groupe alkyle en $C_1$-$C_{10}$ ou un groupe aryle en $C_6$-$C_{10}$, k est un nombre entier qui correspond à la valence de l'atome de métal de transition $M^1$ moins deux et, dans le cas où Y est une unité de butadiène, k est égal à 1,
A réalise un pont,
$R^8$ représente un atome d'hydrogène, un atome d'halogène, un groupe contenant du carbone en $C_1$-$C_{40}$, un radical $-SiR^5_3$, $-NR^5_2$, $-Si(OR^5)_3$, $-Si(SR^5)_3$ ou $-PR^5_2$, où $R^5$ sont identiques ou différents et représentent un atome d'halogène, un groupe alkyle en $C_1$-$C_{10}$ ou un groupe aryle en $C_6$-$C_{10}$, et
X représente un élément du groupe Va ou Via du Système Périodique des Eléments, X portant, lorsque X est un élément du groupe Va, un radical $R^9$ qui représente un atome d'hydrogène, un atome d'halogène, un groupe contenant du carbone en $C_1$-$C_{40}$, un radical $-SiR^5_3$, $-NR^5_2$, $-Si(OR^5)_3$, $-Si(SR^5)_3$ ou $-PR^5_2$, où $R^5$ sont identiques ou différents et représentent un atome d'halogène, un groupe alkyle en $C_1$-$C_{10}$ ou un groupe aryle en $C_6$-$C_{10}$.

**2.** Composé de métal de transition de la formule I, suivant la revendication 1, dans lequel A représente

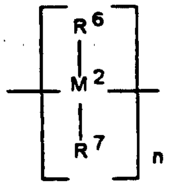 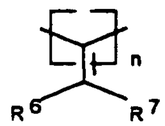 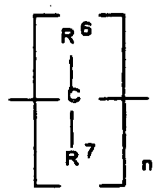 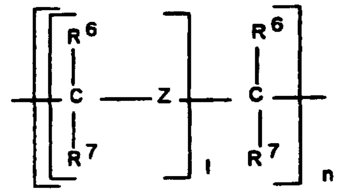

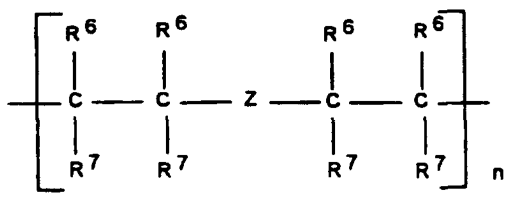

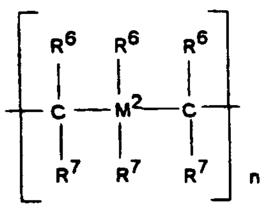 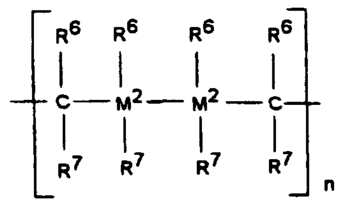 ou 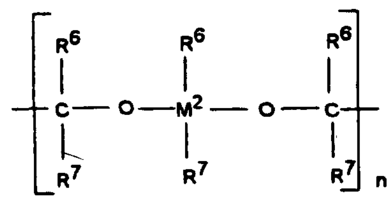

où n est un nombre entier de 1 à 20, l un nombre entier de 1 à 20, Z représente =$NR^5$, =CO, =$PR^5$, =$P(O)R^5$, =SO, $SO_2$, O ou S, où $R^5$ sont identiques ou différents et représentent un atome d'halogène, un groupe alkyle en $C_1$-$C_{10}$ ou un groupe aryle en $C_6$-$C_{10}$,
$R^6$ et $R^7$ sont identiques ou différents et représentent un atome d'hydrogène, un atome d'halogène, un groupe contenant de l'hydrocarbure en $C_1$-$C_{40}$, deux radicaux $R^6$, deux radicaux $R^7$ ou un radical $R^6$ et un radical $R^7$ pouvant chaque fois former un système cyclique avec les atomes qui les relient, $M^2$ étant du silicium, du germanium ou de l'étain.

**3.** Composé de métal de transition de la formule I suivant l'une des revendications 1 et 2, dans lequel

$M^1$ est un métal du groupe IVb du Système Périodique des Eléments, tels que du titane, du zirconium ou de l'hafnium,
$R^1$, $R^2$, $R^3$ et $R^4$ sont identiques ou différents et représentent un atome d'hydrogène ou un groupe contenant de l'hydrocarbure en $C_1$-$C_{10}$, deux ou plusieurs radicaux $R^1$, $R^2$, $R^3$ ou $R^4$ pouvant former conjointement avec les atomes qui les relient un système cyclique,
Y sont identiques et représentent un groupe contenant de l'hydrocarbure en $C_1$-$C_{10}$ ou un atome d'halogène,
A représente

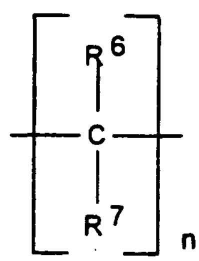

ou

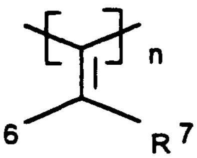

où n est un nombre entier de 1 à 8,
$R^6$ et $R^7$ sont identiques ou différents et représentent un atome d'hydrogène ou un groupe contenant de l'hydrocarbure en $C_1$-$C_{10}$, deux radicaux $R^6$, deux radicaux $R^7$ ou un radical $R^6$ et un radical $R^7$ pouvant former chaque fois avec les atomes qui les relient un système de noyau d'hydrocarbure,
$R^8$ représente un groupe d'hydrocarbure en $C_1$-$C_{10}$, et
X représentent un élément du groupe Va ou VIa du Système Périodique des Eléments, X portant, lorsque X est un élément du groupe Va, un radical $R^9$ qui est un atome d'hydrogène ou un groupe contenant de l'hydrocarbure en $C_1$-$C_{10}$, ou signifie un radical $-SiR^5_3$, $-NR^5_2$, $-Si(OR^5)_3$, $-Si(SR^5)_3$ ou $-PR^5_2$, où $R^5$ sont identiques ou différents et représentent un groupe alkyle en $C_1$-$C_{10}$ ou un groupe aryle en $C_6$-$C_{10}$.

**4.** Composé de métal de transition de la formule I suivant l'une ou plusieurs des revendications 1, 2 et 3, dans lequel

$M^1$ est du titane ou du zirconium,
$R^1$, $R^2$, $R^3$ et $R^4$ sont identiques ou différents et représentent un atome d'hydrogène, un groupe alkyle en $C_1$-$C_4$ ou un groupe aryle en $C_6$-$C_{10}$, $R^1$ et $R^2$ ou $R^3$ et $R^4$ ou $R^2$ et $R^3$ pouvant former avec les atomes qui les relient un système cyclique d'hydrocarbure aromatique,
Y sont identiques et représentent en particulier du méthyle, du phényle ou du chlore,
A représente

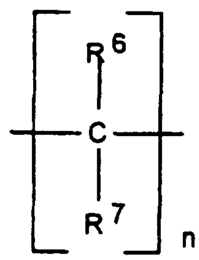

ou

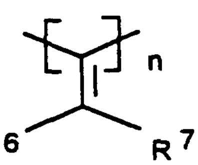

$R^6$ et $R^7$ sont identiques ou différents et représentent un atome d'hydrogène, un groupe alkyle en $C_1$-$C_4$ ou un groupe aryle en $C_6$-$C_{10}$, $R^8$ représente un groupe alkyle en $C_1$-$C_4$ ou un groupe aryle en $C_6$-$C_{10}$, X représente de l'azote ou de l'oxygène, X portant, dans le cas où il représente de l'azote, un radical $R^9$ qui représente un atome d'hydrogène, un groupe alkyle en $C_1$-$C_4$, un groupe aryle en $C_6$-$C_{10}$, $-SiR^5_3$ ou $-Si(OR^5)_3$, où $R^5$ sont identiques ou différents et représentent un groupe alkyle en $C_1$-$C_4$ ou un groupe aryle en $C_6$-$C_{10}$.

**5.** Procédé de préparation d'un composé de métal de transition de la formule I suivant une ou plusieurs des revendications 1 à 4, comprenant les étapes

a) de réaction d'un composé de la formule IV ou VII :

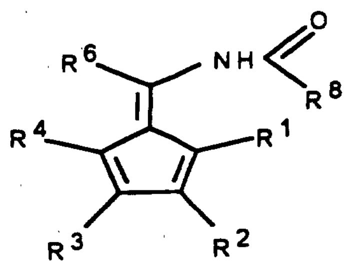

(IV)

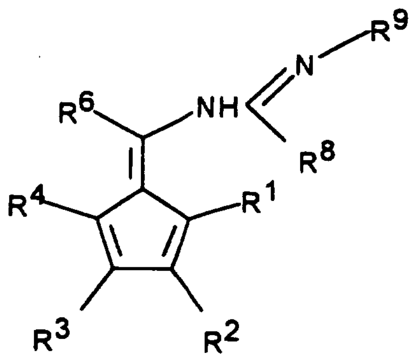

(VII)

avec un composé nucléophile ou basique et
b) de réaction du produit de réaction avec un composé métallique

$$M^1Y_{k+2}$$

**6.** Catalyseur, contenant

a) au moins un composé de métal de transition de la formule I suivant une ou plusieurs des revendications 1 à 4, et
b) au moins un cocatalyseur.

**7.** Catalyseur suivant la revendication 6, contenant en supplément un support.

**8.** Procédé de préparation d'un polymère oléfinique par polymérisation d'une ou de plusieurs oléfines en présence d'un catalyseur suivant l'une des revendications 6 et 7.

**9.** Utilisation d'un catalyseur suivant l'une des revendications 6 et 7 pour la préparation d'un polymère oléfinique.

**10.** Polymère oléfinique, préparable suivant le procédé selon la revendication 8.